# EUROPEAN PATENT APPLICATION

(11) **EP 4 759 689 A1**
(43) Date of publication of application: **17.06.2026**
(21) Application number: 24383370.4
(22) Date of filing: 13.12.2024
(51) Int. Cl.: B62D 55/30

(54) **SELF-ADJUSTING TRACK TENSIONING SYSTEM FOR TRACKED VEHICLES**

(71) Applicant: Santa Barbara Sistemas, S.A., 28033 Madrid (ES)
(72) Inventor: BERROCAL SIGUERO, Alejandro, Madrid (ES); LUGO ÁLVAREZ, David, Madrid (ES)
(74) Representative: Balder IP Law, S.L.

(57) **Abstract**

The invention refers to a self-adjusting track tensioning system (1) for tracked vehicles, wherein the system comprises: first and second hydraulic cylinders (3, 4) for tensioning left and right tracks of a tracked vehicle, a hydraulic power unit (6) for supplying hydraulic power to the first and second hydraulic cylinders, sensors for monitoring position and pressure in the first and second hydraulic cylinders, and a control unit (9) configured for controlling individually the pressure supplied to first and second hydraulic cylinders (3, 4), based on the pressure measured by the sensors. The first and second hydraulic cylinders (3, 4) are fluidly communicated to exchange oil from one cylinder to the other, and the control unit (9) is further configured to regulate the flow of oil from one cylinder to the other, in order to equalize hydraulic pressure in both cylinders and to maintain track tension above a predefined value. The system ensures correct track tension at all times, and independently at each side of the vehicle.

## Description

### TECHNICAL FIELD

The invention refers to a self-adjusting adaptative track tensioning (SATT) system for tracked vehicles, that ensures correct track tension at all times, and independently at each side of the vehicle.

The field of application of the of the invention is all tracked vehicles, especially military vehicles, whose tracks tension are critical for the overall vehicle performance, and it is subjected to be adjusted and optimized.

### STATE OF THE ART

In the field of tracked vehicles in particular fighting tracked vehicles, a key parameter for the good performance of the running gear system is the tension under which the tracks work. A desired value cannot always be maintained during the use of the vehicle as it depends on the terrain profile and suspension characteristics, which can lead to undesired behavior of the system.

There are several factors affecting the tracks tension, the most important of which is the terrain because these vehicles drive in areas which are truly extreme. In these circumstances, significant variations in track tension occur as a result of suspension movement. To avoid excessive low-pressure situations with the possibility of the track spragging and/or dismount at the sprocket, tracked vehicles include an idler wheel opposite to the sprocket. These idler wheels are connected to a hydraulic cylinder, that keep the needed track tension to ensure the mobility capabilities of the vehicle, by adjusting this ram length accordingly.

The track tension is settled in static conditions, which means that before the vehicle starts moving it is necessary to adjust at the tensioner mechanism at a specific condition (pressure and cylinders position). The equivalent track tension should be sufficient to avoid or mitigate the low-tension period due to the vehicle movements over hard terrain and extreme maneuvers. To limit as much as possible this behavior, in some cases, will be necessary to apply extra tension longer time, even in situations where it is not necessary. This excessive tension reduces the life cycle of the tracks.

In addition to the case described above, the track tensioning process is a manual activity that requires mechanics, tools, specific location, and long time.

Checking the track tension condition, is a similar time-consuming process to be carried out in a preventive way, as far as tracks are stretched when wear out is increasing.

Therefore, there is a need in this technical field for a self-adjusting track tensioning system, which allows track tension to be maintained automatically within desired values and under any circumstance or scenario, allowing to increase the life cycle of the tracks and to avoid erratic operation of the vehicle.

### DESCRIPTION OF THE INVENTION

The invention refers to a self-adjusting track tensioning system for tracked vehicles, which automatically set the track tension at both sides of a vehicle, according to the needs of the platform, using onboard hydraulic source.

As far as position of some track guiding components (such as road wheels) is moving accordingly with suspension, track perimeter is affected. This suspension effect, highly dependent on vehicle maneuver applied and suspension characteristic, requires immediate reactions on a compensating element.

Idler wheel assembly adjusts its position being pulled/pushed by track tensioner (compensating element).

The self-adjusting tensioning system of the invention adapts track tension to optimal for each maneuver.

Principle of behavior is based on the interconnection of both hydraulic cylinders between them, together with an accumulator in compensation mode, which allows to equalize the hydraulic pressure in both tracks with minimal hysteresis, always according to the driving requirements and performance needs. Thus, when one side of the track is tensioned/stretched by a traction effect, and opposite side reduce track tension due to lower traction effect, for example in a tight corner, this asymmetrical force applied is compensated by reducing cylinder stroke in vehicle side where higher load is seen and increasing in the other, by introducing oil flow in opposite cylinder.

Built in pressure inside the cylinders is also supported by accumulator inlet, always pressurized ready to load when needed.

The system is fully controlled by an Electronic Control Unit (ECU) that commands valves mounted in a manifold block.

This way of compensation allows idler wheel being in contact with track, maintaining suitable force and indeed track tension longer on both sides, for a better track guidance and slack absorption.

Such way of adapting optimal track tension as per terrain and maneuver encountered, allows that nominal tensioning setting can be reduced, increasing durability, reducing fuel consumption and life cycle costs for track and suspension system.

SATT system allows individual cylinder positioning control, obtained thanks to hydraulic flow management by means a manifold block, that relies in electrovalves smart control managed by ECU logic implemented.

In addition, this self-adjusting system allows for predictive maintenance of the tracks, and other modes for specific maneuvers, such as reverse obstacle negotiation or affording soil terrain, where a "plus" track tension means a de-tracking risk mitigation.

The system comprises both Hardware (1) and Software (2), as detailed below:
1. Hardware
   - Two hydraulic cylinders for tensioning left and right tracks of the vehicle. The cylinders incorporate stroke and pressure sensor on each cylinder.
      Both cylinders are hydraulically actuated by receiving or discharging oil, adjusting cylinders position accordingly. Sensors mounted are configured for monitoring pressure and position, this data acquisition serves for system feedback and calculation, being able to iterate as per logic programmed, in order to keep always right actuation required for each maneuver. Cylinders characteristics can variate between SATT system versions, dependent on platform running gear architecture and components disposition.
   - Hydraulic power unit to hydraulically energize the system. A pump supplies oil through inlet pressure to the accumulator, and contains a tank receiving system discharge outlet. Necessary volume in the tank is concerned considering system integration and capacity.
   - Acumulator/s to support the hydraulic unit. Single or several accumulators are implemented as pressure reservoir, in order to be ready to act on cylinders as per valves control when needed.
   - Manifold that includes control valves for command hydraulic response to/from cylinders, as per logic programmed.
   - Electronic Control Unit (ECU) that monitors and manages the valves according to the selected mode. This unit embodies Software programmed for system logic implementation.
2. Software
   - Physically supported by the ECU, system logic is behind the Software that commands Hardware actuation.

According to the selected mode, the system controls the cylinders pressure individually, activating or deactivating specific valves to adjust the tension of the tracks.

The control unit is configured, but not limited, to operate the system under the following operation modes:
- Maintenance (Discharge) mode: hydraulic fluid from the hydraulic cylinders and accumulator is drained, to release track tension, in order to perform running gear or SATT system maintenance. This mode is intended to be used before any maintenance task in the running gear which involves removing the track tension.
- Default mode: Set system pressure at a fix value (standard), corresponding to a specific track tension. Once the setting is applied, cylinders will be isolated and fix the idler wheel in position under all circumstances as far as cylinders stroke are also fixed.
- Compensation mode: once the track tension is set at standard pressure, the system compensates dynamically the pressure of the cylinders to avoid low track tension in each side, as explained above.
- Tensioning mode: this mode is used to reset the correct pressure automatically. The system adjusts the pressure in the cylinders to the set pressure while the vehicle is static or slow move. Different pressure levels could be set, depending on the driving modes defined.
- Emergency mode: this mode allows the track to be tensioned manually in the event of a power or hydraulic failure in the system.

System has growth capacity to be adjusted as per further mobility necessities.

### BRIEF DESCRIPTION OF THE FIGURES

To complete the description and, in order to provide a better understanding of the invention, the following figures are shown, forming an integral part of the description and illustrating embodiments of the invention, which should not be interpreted as restricting the scope of the invention, but just as examples of how the invention can be carried out. The drawings comprise the following figures:
Figure 1.- shows a practical embodiment of a track tensioning system of the invention.
Figures 2 to 6.- shows schematic views of the system layout and fully control options, wherein Figure 2 shows the compensation mode; Figure 3 shows the default/isolated mode; Figure 4 shows an adjustment mode for the left-hand side cylinder; Figure 5 shows an adjustment mode for the right-hand side cylinder, and Figure 6 shows the maintenance / discharge mode.

### PREFERRED EMBODIMENTS OF THE INVENTION

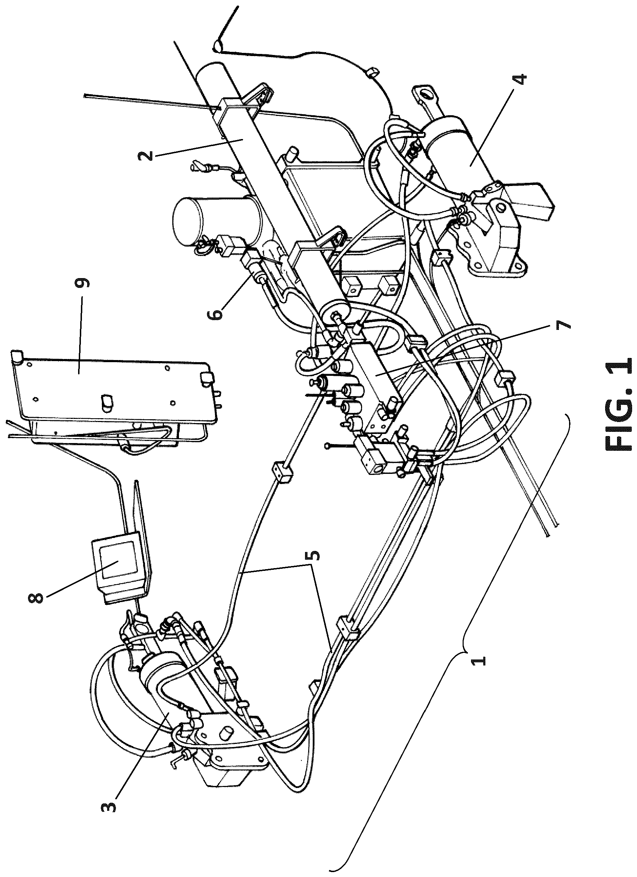

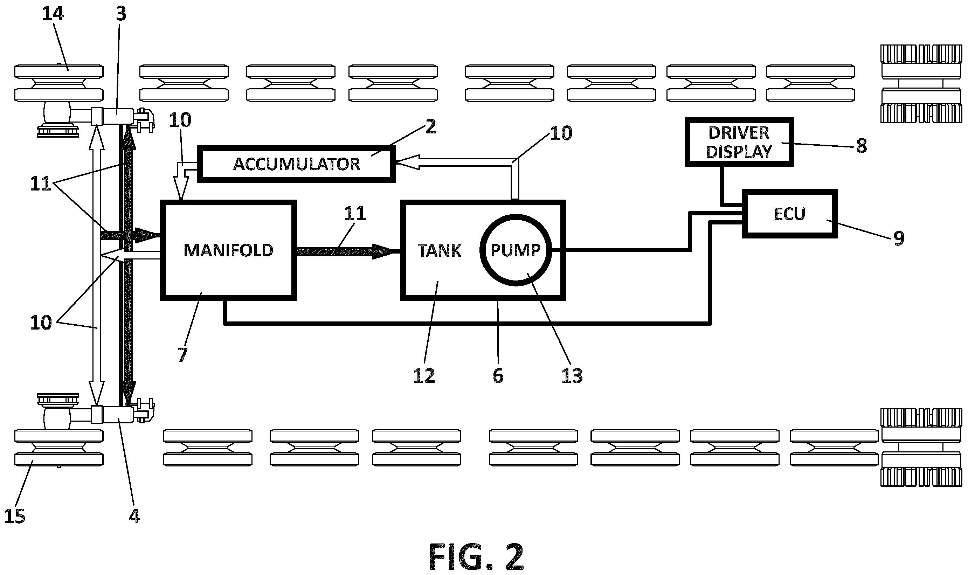

**Figure 1** shows a practical embodiment of a track tensioning system (1) according to the invention, which comprises a first hydraulic cylinder (3) and a second hydraulic cylinder (4) for their connection with idler wheels (14, 15) as shown in **Figures 2** to **6****,** for tensioning, respectively, left and right tracks (not shown) of a tracked vehicle in a known manner, and a hydraulic power unit (6) for supplying hydraulic power to the first and second hydraulic cylinders (3, 4) by means of hoses (5), a reservoir/accumulator (2) is provided in the pressure line between hydraulic power unit (6) and manifold block (7). The hydraulic power unit (6) is formed by an oil tank (12) and a hydraulic pump (13) to pump oil from the oil tank (12) as shown in **Figures 2** to **6****.**

Logic of control is managed by software embodied in Electronic Control Unit ECU (9). Manual mode input and data monitoring is controlled by means driver display (8).

**Figure 2** shows a layout of the track tensioning system (1) of the invention, representing compensation flow directions. In this mode, both cylinders (3, 4) can be connected, being able to transfer oil flow between them, but also to receive oil from the accumulator (2) or discharge to tank (12), always passing through the manifold (7), and commanding suitable valves. First arrows (10) show oil inlet from power unit (6) to the accumulator (2) and flow direction to cylinders (3, 4), passing through accumulator (2) for quick discharge when needed. Second arrows (11) show return outlet direction from cylinders (3,4), allowing full connection between them, but also discharge to tank (12) being controlled by manifold valves actuation.

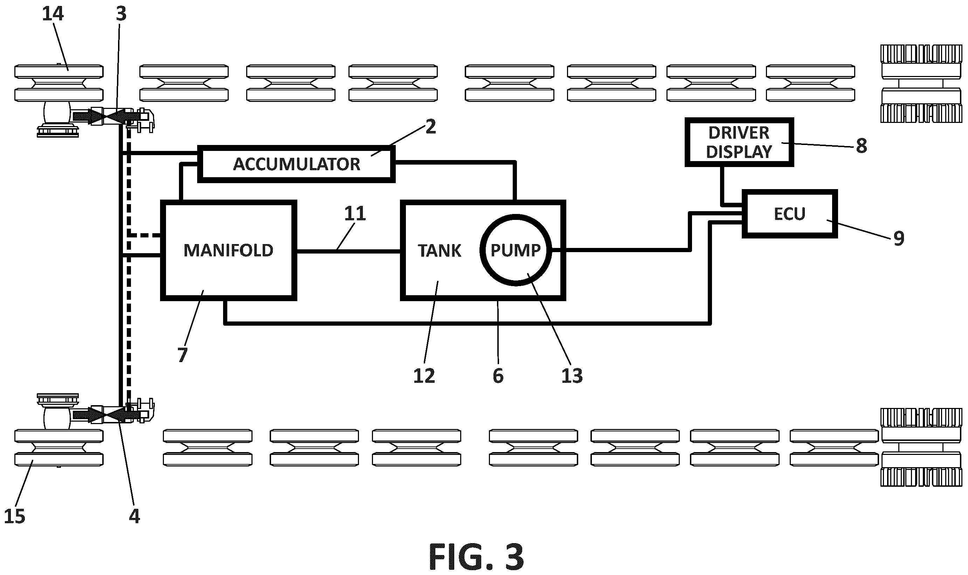

**Figure 3** shows a layout representation of the track tensioning system (1) of the invention, representing default/isolation mode. This mode does not energize any of the main manifold block valves, and indeed, keeping them closed and cylinder isolated. By avoiding electrovalves energizing and manifold block, cylinders (3, 4) keep isolated/blocked at a required position. Electronically controlled by ECU, the system logic embodied is able to accurately set cylinders position for optimal as per needed maneuver.

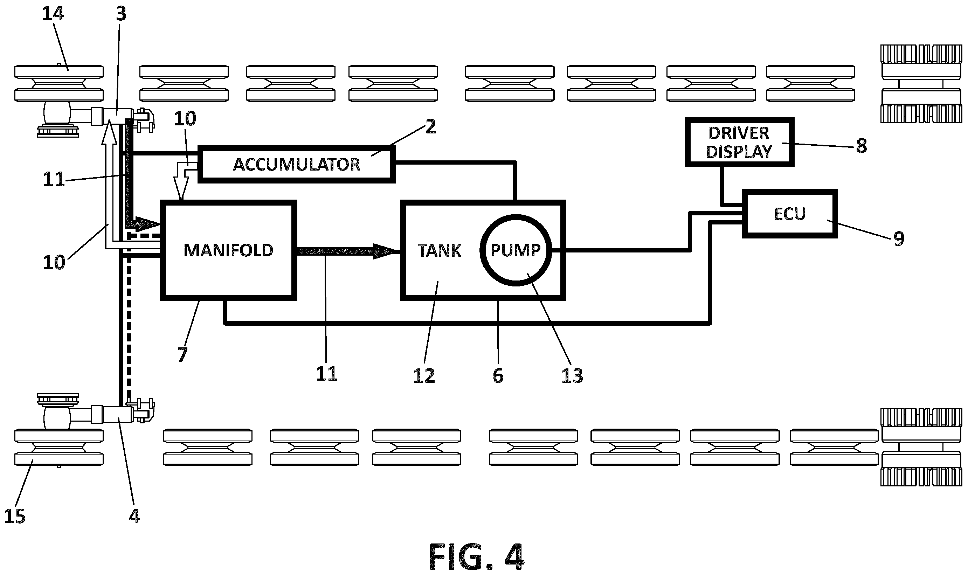

**Figure 4** shows a layout representation of the track tensioning system (1) of the invention, representing Left hand side adjustment/control capacity. Left Cylinder (3) is able to be extended by receiving oil flow from accumulator (2) through the manifold (7) as indicated by first arrows (10) in the figure, or discharge oil to tank (12) also through the manifold (7) as indicated by second arrows (11) in the figure. This feature enables cylinder stroke control independently for a continuous setting/adjustment. Valves control allows set cylinder individually if needed. Oil flow is controlled by pressure compensation and control.

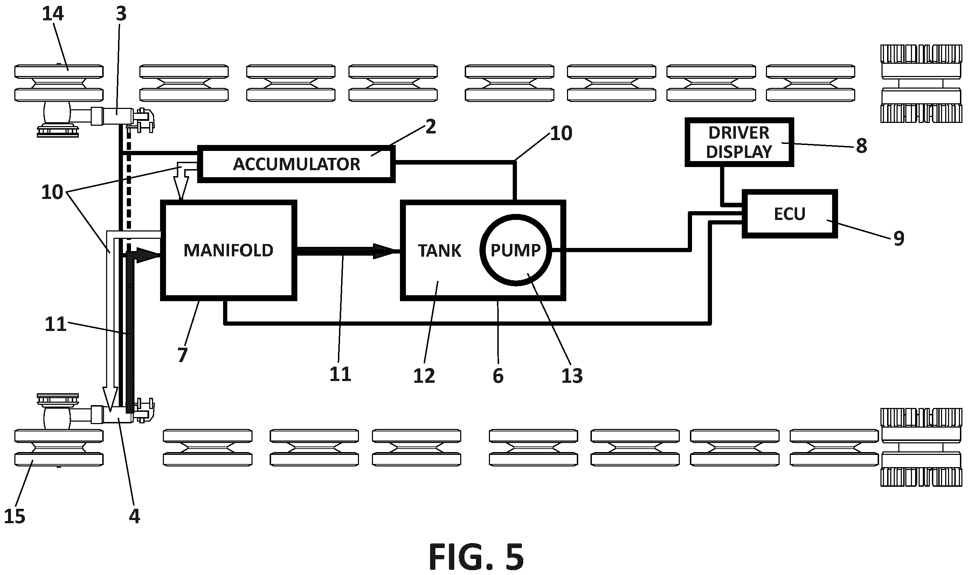

**Figure 5** shows a layout representation of the track tensioning system (1) of the invention, representing Right hand side adjustment/control capacity. Right cylinder (4) is able to be extended by receiving oil flow from accumulator (2) through the manifold (7) as indicated by first arrows (10) in the figure, or discharge volume to tank (12) also through the manifold (7) as indicated by second arrows (11) in the figure. This feature enable cylinder stroke control independently for a continuous setting/adjustment. Valves control allows set cylinder individually if needed. Oil flow is controlled by pressure compensation and control.

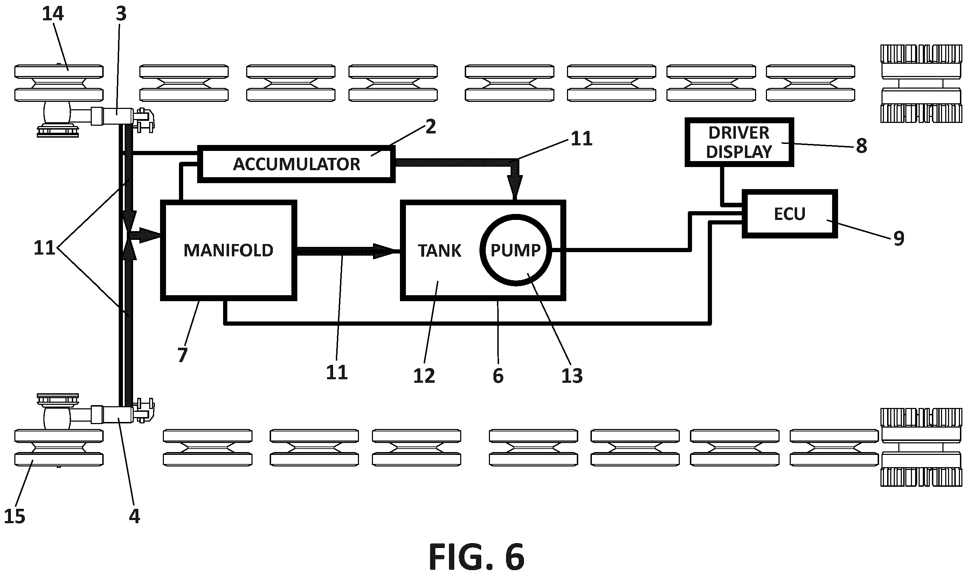

**Figure 6** shows a layout representation of the track tensioning system (1) of the invention, representing cylinders (3, 4) and accumulator (2) discharge to tank (12). Again, commanding valves in manifold (7) block it is possible discharge one or several cylinders (3, 4), but also pressure retained in accumulator (2) and rest of circuit to tank (12), as indicated by arrows (11) in the figure. Mainly for maintenance purposes, individual or simultaneously controlled, cylinders can discharge oil straight to tank for system drainage and track slacking.

The system (1) comprises a control unit embodied as an electronic part and a mechanical/hydraulic part.

Depending on the signal the ECU (9) receives, it decides which mode is necessary. For example, if the vehicle performs emergency braking, the ECU receives this information, activates the compensation mode, sends the electrical signal to valves main interface valves, together to non-return valves on manifold and actives them to increase the oil pressure in case the tracks have low the pressure. This oil increase is realized by the accumulator (2) or with oil from one of the cylinders (both cylinders (3, 4) are connected within the manifold (7)).

In addition, the system (1) is not only designed to maintain the tension around the tracks in all of types of terrains, it also allows to the driver to supervises the static defined pressure without any assistance. The system reads the pressure and stroke of both cylinders that are connected to the idler wheels (14, 15). In case this pressure is low it indicates that the tracks of the tracked vehicles have an incorrect tension which causes an incorrect movement.

In these cases, the driver receives a low-tension alarm, the driver can decide whether to activate the tensioning mode or not. In case the driver decides to activate this mode, the ECU receives this signal and sends an electrical signal to the valves in manifold block increasing the oil pressure to the defined one.

The system also allows the driver to easily analyze the status of the individual tracks (left and right side). This means that the ECU reads the stroke and the pressure and sends this information to the driver. New tracks have a specific length but, with use and deterioration, the tracks increase this length (when the ECU reads an excessive length, it sends an alarm to the vehicle). This allows predictive maintenance not only for a specific vehicle, also for an entire fleet managing.

This invention provides to the tracked vehicle a dynamic tensioning system that reduces the erratic behavior at low pressure, reduces the time to realize the nominal tensioning procedure (this can be done anywhere and at any time without tools or mechanics), performs a predictive maintenance and prolongs the life cycle of the tracks by working with less tension.

## Claims

1. Self-adjusting track tensioning system for tracked vehicles, the system comprising:
first and second hydraulic cylinders for tensioning left and right tracks of a tracked vehicle,
a hydraulic power unit for supplying hydraulic power to the first and second hydraulic cylinders,
sensors for monitoring position and pressure in the first and second hydraulic cylinders,
a control unit configured for controlling individually the pressure supplied to first and second hydraulic cylinders, based on the pressure measured by the sensors, in order to adjust the tension of the tracks of a tracked vehicle and wherein the first and second hydraulic cylinders are fluidly communicated to exchange oil from one cylinder to the other, and
wherein the control unit is further configured to regulate the flow of oil from one cylinder to the other, in order to equalize hydraulic pressure in both cylinders and to maintain track tension above a predefined value.

2. A system according to claim 1, further comprising hydraulic power distribution means managed by the control unit, adapted for distributing power from the hydraulic power unit, to the first and second hydraulic cylinders.

3. A system according to claim 2, wherein the hydraulic power distribution means comprises a hydraulic pump, an oil accumulator to store oil under pressure supplied by the hydraulic pump, an oil tank to store return oil from the cylinders, and a manifold fluidly communicating the hydraulic cylinders between them, and the hydraulic cylinders with the accumulator.

4. A system that is able to adjust idler wheel position dynamically, both static and on the move, for set the optimal track tension to the system, avoiding or limiting track spragging to the minimal and increasing track durability and performance.

5. Potential Hardware layout and associated Software adaptations/versions that automatically controls track tension using pressure equalization and compensation concept.

6. A tracked vehicle comprising: first and second tracks, and first and second hydraulic cylinders for tensioning respectively the left and right tracks, means for detecting the track tension of the first and second tracks, and the self-adjusting track tensioning system defined in any of the claims 1 to 3, and wherein the control unit is configured to transfer oil from one hydraulic cylinder to the other when it is detected that one of the tracks is more tensioned than the other, and wherein oil transfer is carried out from the cylinder corresponding to the more tensioned track to the other cylinder.
